# EUROPÄISCHE PATENTSCHRIFT

(11) **EP 0 453 876 B1**
(45) Veröffentlichungstag und Bekanntmachung des Hinweises auf die Patenterteilung: **11.06.1997**
(21) Anmeldenummer: 91105725.5
(22) Anmeldetag: 11.04.1991
(51) Int. Cl.: H04J 3/06

(54) **Synchronisationsverfahren für SDH-Systeme sowie Verfahren und Schaltungsanordnung zum Erkennen unterschiedlicher Datenstrukturen**
Synchronisation method for SDH-systems and method and circuit for the recognition of various data structures
Méthode de synchronisation pour systèmes de signaux numériques d'une hiérarchie synchrone et circuit et procédé pour la reconaissance de différentes structures de données

(30) Priorität: 21.04.1990 DE 4012762; 12.05.1990 DE 4015283
(43) Veröffentlichungstag der Anmeldung: 30.10.1991
(73) Patentinhaber: Alcatel SEL Aktiengesellschaft, D-70435 Stuttgart (DE)
(72) Erfinder: Turban, Karl-Albert, Dipl.-Ing., W-7016 Gerlingen (DE); Krank, Lothar, Dipl.-Ing., D-7250 Leonberg 6 (DE)
(74) Vertreter: Pohl, Herbert, Dipl.-Ing.

(56) Entgegenhaltungen:
- DE-A- 2 351 478
- DE-A- 3 735 377
- IEEE COMMUNICATIONS MAGAZINE. Bd. 28, Nr. 2, Februar 1990, NEW YORK, US Seiten 47 - 54; DOO WHAN CHOI: 'Frame Alignment in a Digital Carrier System - A Tutorial'
- COMPUTER. Bd. 22, Nr. 11, November 1989, LOS ALAMITOS US Seiten 26 - 34; ANNA HAC ET AL.: 'Synchronous Optical Network and Broadband ISDN Protocols'
- CCITT Recommendation I.432. Genf, CH ; 5 April 1991 NN : ' B-ISDN USER NETWORK INTERFACE PHYSICAL LAYER SPECIFICATION ; Seiten 1 - 15

## Beschreibung

Die Einführung der synchronen digitalen Hierarchie SDH durch das CCITT (Comité Consultatif International Telephonique et Telegraphique) ermöglicht die Realisierung eines weltweiten einheitlichen Übertragungsnetzes.

Die Bitraten der SDH sind in der CCITT-Empfehlung G.707 angegeben. Die Signalstruktur an der Netzknotenschnittstelle ist in der CCITT-Empfehlung G.708 und die Multiplexstruktur in der CCITT-Empfehlung G.709 enthalten.

Ein SDH Rahmen nach CCITT G.708 besteht aus oktettorientierten synchronen Transportmodulen STM-1, mit einer Bitrate von 155 520 kbit/s.

Der Rahmen ist aus 270 Spalten mit je 9 Zeilen aufgebaut. Davon entfallen 9 x 9 Oktette auf einen Kopfabschnitt, section overhead SOH genannt, und 261 x 9 Oktette auf einen Nutzinformationsteil, payload genannt.

Im section overhead SOH ist in der ersten Zeile ein Rahmensynchronisierwort mit einer Länge von 6 Oktette angeordnet. Ferner befindet sich im section overhead in der 4. Zeile ein Zeiger AU-4 PTR, der einen Pfadkopfteil, path overhead POH genannt, eines virtuellen Containers VC4 des Nutzinformationsteils adressiert. Im path overhead POH ist ein weiterer Zeiger H4 angeordnet, der Zellköpfe, Header genannt, eines 260 x 9 Oktette großen intern zellstrukturierten Containers C4 adressiert. Die Zellstruktur des Containers ermöglicht das asynchrone Übertragen von Daten in Form von ATM-Zellen (asynchrone Transport Module) innerhalb eines synchronen Rahmens (SDH).

Um eine schnelle Rahmensynchronisation herzustellen, ist es bekannt, mit Hilfe eines fest vorgegebenen, n bit langen Rahmensynchronisierwortes fortlaufend aus dem empfangenen Bitstrom, getaktet mit einem empfangsseitigen Bittakt, nämlich in Intervallen von 1 Bit Dauer, Bitmuster von n Bit Länge abzufragen, mit dem Rahmensynchronisierwort zu vergleichen und bei Übereinstimmung eine Rahmensynchronisierinformation abzugeben (DE 28 55 676 A1). Bevor man mit hoher Zuverlässigkeit darauf schließen kann, daß die Übertragungsstrecke synchronisiert ist, muß das periodisch auftretende Synchronisierwort in vorgegebenen Abständen wiederholt erkannt werden. Dies hat aber den Nachteil, daß es sehr lange dauert, wenigstens zwei Rahmenlängen, bis der Synchronisierzustand erreicht wird.

Gerade in Systemen, in denen ATM-Zellen zu übertragen sind, ist eine sehr kurze Synchronisierzeit gefordert, da durch Synchronisationsverluste die Dienstequalität stark beeinträchtigt wird.

Außerdem ist eine Übertragung von Zellen konstanter Länge ohne externen Rahmen (Asynchrone Transport Module) bekannt.

Bei rein zellstrukturierter Übertragung werden Zellen gleicher Länge mit einer Periodizität von 53 Oktetten übertragen, wobei jede Zelle 5 Oktette für einen Zellkopf und 48 Oktette für die Nutzinformation aufweist. Der Zellkopf ist mittels eines Codepolynoms codiert, so daß durch empfangsseitige Decodierung des Zellkopfes die nicht codierte Nutzinformation vom Zellkopf unterschieden werden kann.

Desweiteren ist aus DE 37 35 377 A1 ein Verfahren zur Synchronisation eines digitalen Nachrichtenübertragungssystems bekannt, bei dem zu übertragende Zeitmultiplexsignale sendeseitig in Pakete einheitlicher Länge unterteilt werden, die jeweils m Zeitschlitze für einen Kopf wie eine Adresse und n Zeitschlitze für ein Datenfeld aufweisen, und bei dem empfangsseitig aus einem Synchronisiersignal die Paketanfänge ermittelt werden. Dieses Verfahren zeichnet sich dadurch aus, daß von dein Datenfeld sendeseitig x Zeitschlitze für ein erstes Codewort vorgesehen werden, das zur Fehlererkennung aus dem Kopf abgeleitet ist, daß empfangsseitig aus einem m Zeitschlitze umfassenden Prüfteil des Zeitmultiplexsignals ein zweites Codewort in gleicher Weise wie das erste Codewort abgeleitet wird, daß beide Codewörter empfangsseitig verglichen werden, daß bei mangelnder Übereinstimmung der Prüfteil im Zeitmultiplexsignal um ein Bit verschoben und der Vergleich wiederholt wird, daß bei einer bestimmten Anzahl von aufeinanderfolgenden Übereinstimmungen Synchronismus signalisiert wird, daß bei einer anschließenden bestimmten Anzahl von aufeinanderfolgenden Nichtübereinstimmungen ein Ausfall des Synchronismus festgestellt wird und daß bei jeder Nichtübereinstimmung die Weitergabe des zugehörigen Paketes gesperrt wird.

Eine technische Aufgabe gemäß der Erfindung besteht darin, ein Synchronisationsverfahren für nach einer synchronen digitalen Hierarchie SDH rahmenstrukturierte Systeme anzugeben, das einerseits eine große Zuverlässigkeit und andrerseits eine kurze Synchronisierzeit gewährleistet.

Ausgehend von den zwei nicht kompatiblen Datenstrukturen bestehen weitere Aufgaben gemäß der Erfindung darin, ein Verfahren und eine Schaltungsanordnung zur Durchführung des Verfahrens anzugeben, das bzw. die es ermöglicht mit großer Zuverlässigkeit ohne erheblichen Mehraufwand die richtige Datenstruktur zu erkennen.

Diese Aufgaben werden erfindungsgemäß durch die Lehren des Patentanspruchs 1, 4 und 9 gelöst.

Zur Synchronisation wird ein nur einmal erkanntes Rahmensynchronisierwort nicht wie bekannt durch mehrfaches periodisches Wiederauffinden als richtig erkannt bestätigt, sondern es erfolgt eine Bestätigung durch das Decodieren von Headern der im SDH-Rahmen übertragenen ATM-Zellen, so daß ein Erreichen eines Synchronisationszustandes innerhalb einer Rahmenlänge möglich ist.

Erfindungsgemäß wird ein vom Synchronisierwort völlig unabhängiges Kriterium, nämlich das richtige Decodieren der Zell-Header in der Nutzinformation, zur Bestätigung des Rahmensynchronisierwortes benutzt. Denn erfindungsgemäß wird die Tatsache ausgenutzt, daß die Nutzinformation, d. h. die ATM-Zellen, über im festen Abstand zum Synchronisierwort angeordnete Zeiger adressiert werden.

Das erfindungsgemäße Synchronisierverfahren gemäß Patentanspruch 1 ist für alle rahmenstrukturierte Systeme verwendbar, die einerseits ein periodisches Synchronisierwort übertragen und gleichzeitig über wenigstens einen Zeiger einen Datenbereich adressieren, in dem Nutzinformationen mit gesonderten Codewörtern enthalten sind.

Falls zwei unterschiedliche Datenstrukturen (SDH-System, ATM-Zellen) erkannt werden sollen, wird gemäß Patentanspruch 4 verfahrensmäßig ein Übergang in zwei stationäre Zustände ermöglicht, wobei die zugehörige erfindungsgemäße Schaltungsanordnung nach Patentanspruch 9 mittels der Schalteinheiten die Reihenfolge der funktionalen Blöcke derart verändern kann, daß nicht lediglich eine Bypassanordnung (entweder Rahmenstruktur oder Zellstruktur), sondern eine flexible Nutzung aller funktionalen Blöcke ermöglicht wird und nur ein minimaler Schaltungsaufwand erforderlich ist.

Weitere vorteilhafte Ausgestaltungen des Gegenstandes der Erfindung sind den abhängigen Ansprüchen zu entnehmen.

Ein Ausführungsbeispiel wird im folgenden anhand der Zeichnungen erläutert.

Es zeigen:
- Fig. 1: eine Struktur eines gemäß einer synchronen digitalen Hierarchie SDH aufgebauten Rahmens und
- Fig. 2: ein das erfindungsgemäße Synchronisationsverfahren angebender Zustandsgraph,
- Fig. 3: ein Blockschaltbild der erfindungsgemäßen Schaltungsanordnung und
- Fig. 4: ein das erfindungsgemäße Verfahren zur Erkennung unterschiedlicher Datenstrukturen angebender Zustandsgraph.

Für eine durch das CCITT eingeführte synchrone digitale Hierarchie SDH, wird von einer Rahmenstruktur gemäß einer CCITT Empfehlung G.708 ausgegangen. Ein SDH-Rahmen besteht aus oktettorientierten synchronen Transportmodulen STM-1, die für Signale mit einer Bitrate von 155 520 kbit/s vorgesehen sind.

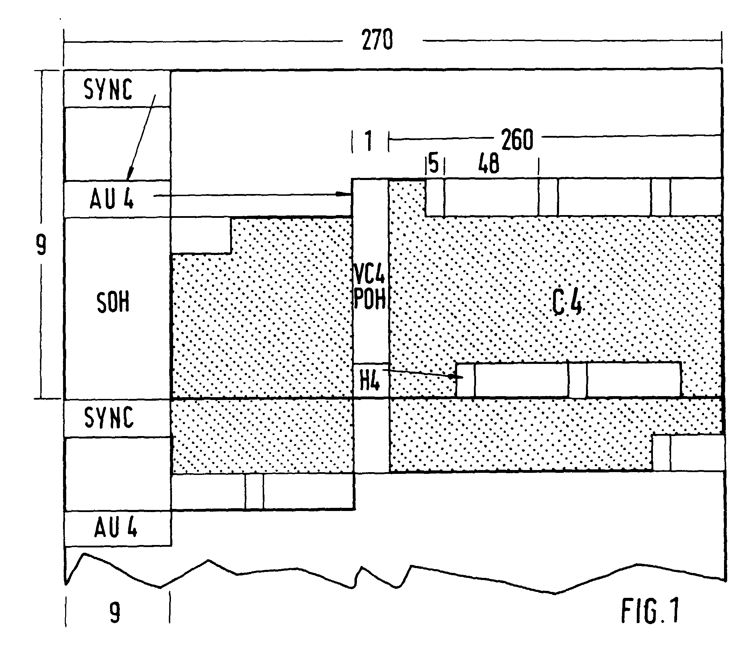

Wie in Fig. 1 gezeigt, ist der Rahmen aus 270 Spalten und 9 Zeilen für je 1 Oktett aufgebaut. Davon entfallen 9 x 9 Oktette auf einen Kopfabschnitt SOH, im folgenden section overhead SOH genannt, sowie 261 x 9 Oktette für die Nutzinformation, die mit payload bezeichnet wird.

In der ersten Zeile des section overhead SOH ist ein Synchronisierwort SYNC angeordnet, das eine Länge von 6 Oktetten aufweist und zur Rahmensynchronisation periodisch (vgl. Fig. 1) übertragen wird.

Innerhalb der Nutzinformation befindet sich ein zellstrukturierter Container C4, der ein asynchrones zellstrukturierts Signal, ATM-Zellen, mit einer Bitrate von 149,76 Mbit/s übertragen kann.

Die ATM-Zellen weisen eine Periodizität von 53 Oktetten, mit 5 Oktetten für einen Zellkopf, im folgenden Header genannt, und 48 Oktetten für die Nutzinformation auf. Der Header ist mittels eines Codepolynoms codiert, so daß durch empfangsseitige Decodierung des Headers die nicht codierte Nutzinformation vom Header unterschieden werden kann.

Dem Container C4 ist ein Pfadkopfteil, path overhead POH genannt, zugeordnet und der path overhead zusammen mit dem Container C4 bilden einen virtuellen Container VC4.

Da der Rahmen des virtuellen Containers VC4 und der Rahmen des übergeordneten synchronen Transportmoduls STM-1 keine feste Phasenbeziehung zueinander haben, wird die sogenannte Zeigertechnik verwendet.

Ein erster Zeiger AU-4 ist in Zeile 4 des section overhead SOH angeordnet und adressiert den virtuellen Container VC4, d.h. er zeigt auf den path overhead POH.

Im path overhead ist ein zweiter Zeiger H4, in der 6. Zeile, angeordnet, der den Anfang einer ATM-Zelle, d.h. den Header adressiert (vgl. Fig. 1).

In dem in Fig. 1 gezeigten Rahmenaufbau sind nur die für die Erfindung wesentlichen Informationen gezeigt. Eine detaillierte Beschreibung ist den CCITT Empfehlungen G.707, G.708, G.709 zu entnehmen.

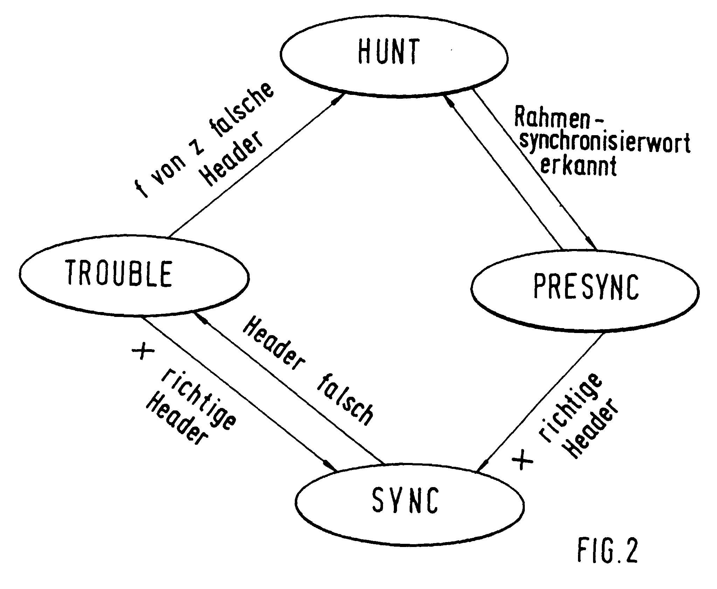

Ausgehend von einem Rahmenaufbau gemäß Fig. 1 wird nun das erfindungsgemäße Synchronisierverfahren für SDH-Systeme anhand des Zustandsgraphs aus Fig. 2 erläutert.

Zur Herstellung eines Synchronisationszustandes SYNC wird zuerst in einem Suchmodus HUNT durch bitweises Vergleichen einer ankommenden Bitfolge mit einem vorgegebenen das Synchronisierwort darstellenden Referenzbitmuster das Rahmensynchronisierwort ermittelt.

Da es sich um einen in Oktette unterteilten Rahmen handelt, sind unmittelbar nach dem Auffinden eines Rahmensynchronisierwortes alle folgenden Oktette ausgerichtet.

In dem nun folgenden Vorsynchronisationszustand PRESYNC wird der im konstanten Abstand zum Synchronisierwort, in Zeile 4 des section overhead SOH stehende erste Zeiger AU-4 gelesen. Der AU-4 Zeiger zeigt auf das erste Oktett im virtuellen Container VC4, d.h. auf den path overhead POH. Der path overhead POH enthält in Zeile 6 den zweiten Zeiger H4, der den Anfang einer ATM-Zelle, d.h. den Header adressiert.

Gemäß dem Codepolynom, mit dem der Header codiert ist, erfolgt jetzt eine Decodierung. Werden aufeinanderfolgend eine vorgegebene Anzahl x richtig erkannter Header festgestellt, erfolgt ein Übergang in den Synchronisationszustand SYNC. Für x kann z.B. der Wert 6 vorgegeben werden.

Das erfindungsgemäße Verfahren, ein periodisches Rahmensynchronisierwort zu ermitteln, dann die im Rahmen fest vorgegebenen Zeiger zu lesen und nach Codewörtern zu suchen(Header) ermöglicht eine sehr schnelle Synchronisation, noch bevor ein kompletter Rahmen empfangen wurde.

Solange jetzt das Rahmensynchronisierwort und die Header in der richtigen Position erkannt werden, verbleibt das System im Synchronsisierzustand SYNC.

Infolge einer Fehlermeldung wird zunächst in einen Überprüfungszustand TROUBLE übergegangen. Werden jetzt innerhalb einer Anzahl z aufeinanderfolgender Zellen eine Anzahl f falscher Header ermittelt, so erfolgt ein Übergang in den Suchmodus HUNT und es schließt sich das zuvor beschriebene Synchronisationsverfahren an.

Waren z.B. nur Header-Fehler infolge von einmalig auftretenden Bitfehlern gemeldet worden, so wird, falls aufeinanderfolgend wieder die Anzahl x richtig erkannter Header festgestellt werden, wieder in den Synchronisationszustand SYNC zurückgegangen. Eine Neusynchronisation wird also vermieden, wenn lediglich kleine Fehler auftreten.

Das erfindungsgemäße Synchronisationsverfahren ist universell für solche Systeme verwendbar, die ein periodisches Synchronsierwort übertragen und über wenigstens einen Zeiger einen Datenbereich adressieren, in dem Daten mit gesonderter Codierung übertragen werden.

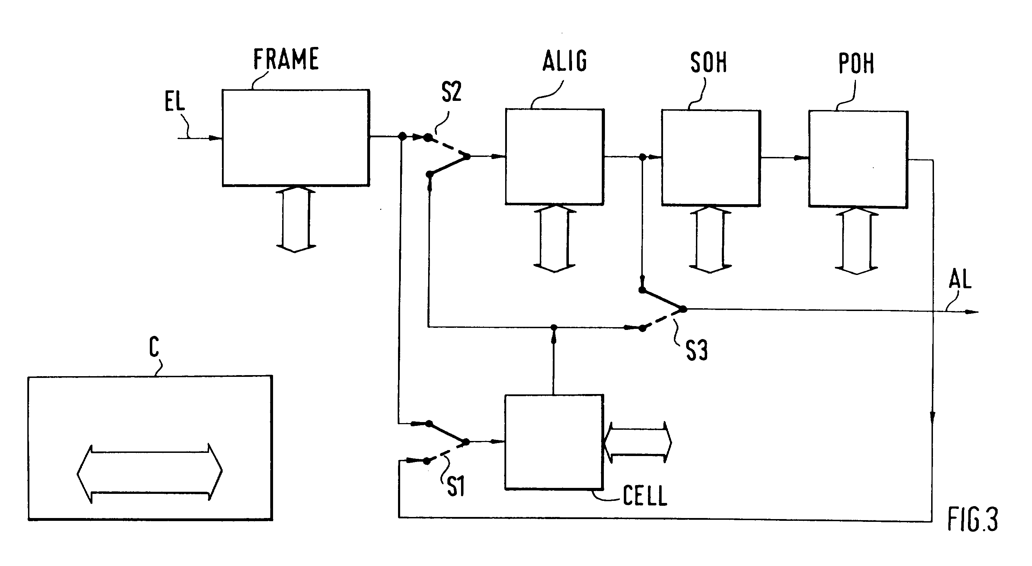

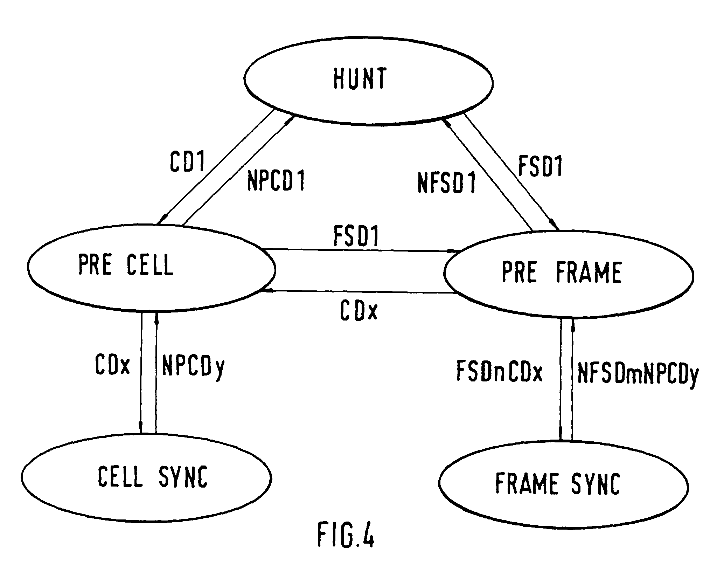

Ausgehend von einem wie zuvor beschriebenen SDH-System einerseits und einer rein zellstrukturierten Übertragung von ATM-Zellen andererseits, wobei die ATM-Zellen, wie bereits beschrieben, eine Periodizität von 53 Oktetten aufweisen, wird nun die erfindungsgemäße Schaltungsanordnung gemäß Fig. 3 und das erfindungsgemäße Verfahren zum Erkennen unterschiedlicher Datenstrukturen gemäß dem in Fig. 4 gezeigten Zustandsgraphen beschrieben.

Ein über eine Eingangsleitung EL ankommende Bitfolge wird einer Rahmensynchronisierworterkennungseinheit FRAME zugeführt, in der durch bitweises Vergleichen der ankommenden Bitfolge mit einem vorgegebenen das Rahmensynchronisierwort darstellenden Referenzbitmuster die ankommende Bitfolge überprüft wird.

Die Rahmensynchronisierworterkennungseinheit FRAME ist über eine erste Schalteinheit S1, in einer ersten Schaltstellung, an eine mit einer Ausgangsleitung AL verbundene Zellkopfdecodiereinheit CELL angeschlossen, so daß die die Rahmensynchronisierworterkennungseinheit FRAME transparent durchlaufende Bitfolge quasi gleichzeitig auf regelmäßig eingefügte, Zellköpfe angebende Codeworte überprüft werden kann.

In der Fig. 3 ist jeweils die erste Schaltstellung einer Schalteinheit mit durchgezogenem Strich und die zweite Schaltstellung mit unterbrochenem Strich dargestellt.

Nach dem Erkennen eines Rahmensynchronisierwortes wird die Rahmensynchronisierworterkennungseinheit FRAME über eine zweite Schalteinheit S2, in zweiter Schaltstellung, mit Mitteln ALIG zum Ausrichten der empfangenen Bitfolge in Oktette, d.h. zur Oktettgrenzenkorrektur, und mit nachgeschalteten Mitteln SOH, POH zum Lesen eines in einem vorgegebenen Abstand zum Rahmensynchronisierwort angeordneten Zeigers verbunden, wobei die Mittel zum Lesen SOH, POH über die erste Schalteinheit S1 in zweiter Schaltstellung mit der Zellkopfdecodiereinheit CELL verbunden sind. Außerdem ist die Ausgangsleitung AL über eine dritte Schalteinheit S3, in zweiter Schaltstellung, mit der Zellkopfdecodiereinheit CELL verbunden (vgl. Fig. 3).

Die Mittel zum Lesen bestehen aus ersten Mitteln zum Lesen eines in dem Kopfabschnitt SOH des SDH-Rahmens, Zeile 4, Spalte 1 bis 9 angeordneten ersten Zeigers AU-4, der den Pfadkopfteil POH des zellstrukturierten virtuellen Containers VC4 adressiert und aus nachgeschalteten zweiten Mitteln zum Lesen eines im Pfadkopfteil POH, Zeile 6, angeordneten zweiten Zeigers H4, der den Anfang einer ATM-Zelle, d.h. des Zellkopfes angibt, so daß in der Zellkopfdecodiereinheit CELL ein Decodieren der Codewörter erfolgen kann (vgl. Fig. 1).

Falls kein Rahmensynchronisierwort erkannt wird, aber ein Zellkopf richtig decodiert wurde, sind die ersten Schaltstellungen der drei Schalteinheiten S1, S2, S3 wirksam, so daß die ankommende Bitfolge über die Rahmensynchronisierworterkennungseinheit FRAME, dann über die erste Schalteinheit S1 zur Zellkopfdecodiereinheit CELL, dann über die zweite Schalteinheit S2 zu den Mitteln ALIG zum Ausrichten der Oktette und dann über die dritte Schalteinheit S3 zur Ausgangsleitung AL geleitet wird (vgl. Fig. 3). Zur Steuerung der funktionalen Blöcke FRAME, ALIG, SOH, POH, CELL ist eine Verbindung mit einer Steuereinheit C, wie in Fig. 3 gezeigt, vorgesehen.

Das erfindungsgemäße Verfahren zur Erkennung unterschiedlicher Datenstrukturen wird nun anhand des in Fig. 4 gezeigten Zustandsgraphen erläutert.

Zu Beginn wird in einem Suchmodus HUNT die ankommende Bitfolge auf das vorgegebene Rahmensynchronisierwort und nachfolgend auf regelmäßig auftretende Zellköpfe hin überprüft.

Werden ein Rahmensynchronisierwort oder ein Zellkopf richtig erkannt, so wird, wie im folgenden geschildert wird, in einen Rahmensynchronisiermodus bzw. in einen Zellsynchronisiermodus übergegangen.

Im Falle eines einmal richtig erkannten Zellkopfes CD1 (kein Rahmensynchronisierwort erkannt), wird in einen Zellenvorsynchronisierzustand PRE CELL übergegangen und wenn nacheinander wenigstens sechs Zellköpfe richtig erkannt werden CDX (X = 6), wird in einen stationären Zellensynchronzustand CELL SYNC übergegangen.

Falls jedoch in einem Zellenvorsynchronisierzustand PRE CELL ein Rahmensynchronisierwort erkannt wird FSD1, wird in dem Rahmenvorsynchronisierzustand PRE FRAME übergegangen.

Entsprechend wird im Rahmenvorsynchronisierzustand PRE FRAME, wenn das Rahmensynchronisierwort nicht bestätigt, aber die vorgegebene Anzahl von Zellköpfen CDX richtig erkannt wurden, in den Zellenvorsynchronisierzustand PRE CELL übergegangen.

Somit sind erfindungsgemäß, ausgehend von einem Suchmodus HUNT jederzeit die beiden möglichen stationären Zustände FRAME SYNC, CELL SYNC erreichbar.

Wenn nun im Zellensynchronzustand CELL SYNC eine Anzahl y aufeinanderfolgender Zellköpfe falsch erkannt werden, NPCDy, wird wieder in den Zellenvorsynchronisierzustand PRE CELL und falls ein weiterer falscher Zellkopf erkannt, CD1, wird zurück in den Suchmodus gegangen.

Genauso wird vom Rahmensynchronzustand FRAME SYNC in den Rahmenvorsynchronisierzustand PRE FRAME übergegangen, wenn entweder y falsche Zellköpfe hintereinander erkannt, NPCDy, oder m Rahmensynchronisierworte hintereinander nicht erkannt werden NFSDm, wobei infolge eines weiteren nicht erkannten Rahmensynchronisierwortes FSD1 in den Suchmodus zurückgegangen wird.

Das erfindungsgemäße Verfahren erfordert zur Unterscheidung der unterschiedlichen Datenstrukturen keinerlei zusätzliche Informationen und die erfindungsgemäße Schaltungsanordnung kann zwei funktional grundlegend unterschiedliche Datenstrukturen bei minimalem Schaltungsaufwand zuverlässig erkennen.

## Patentansprüche

1. Verfahren zur Synchronisation eines nach einer synchronen digitalen Hierarchie rahmenstrukturierten Systems, mit folgenden Schritten:
- Ermitteln eines Rahmensynchronisierwortes in einem Suchmodus (HUNT) durch Vergleichen einer ankommenden Bitfolge mit einem vorgegebenen Referenzbitmuster,
- Übergehen in einen Vorsynchronisationszustand (PRESYNC) und Lesen wenigstens eines in einem vorgegebenen Abstand zum Rahmensynchronisierwort angeordneten Zeigers (AU-4), der einen zellstrukturierten, digital codierte Bitfolgen enthaltenden Datenbereich (VC4) adressiert,
- Decodieren von in die Bitfolge regelmäßig eingefügten, Zellköpfe (Header) darstellenden Codewörtern und
- Übergehen in einen Synchronisationszustand (SYNC), wenn aufeinanderfolgend eine vorgegebene Anzahl von Zellköpfen richtig decodiert wurden.

2. Verfahren nach Anspruch 1, mit folgenden Schritten:
- Verwenden einer Rahmenstruktur gemäß der CCITT-Empfehlung G.708 mit oktettorientierten synchronen Transportmodulen (STM-1),
- Ermitteln des in einem Kopfabschnitt (SOH) einen Rahmenanfang des Transportmoduls angebenden Rahmensynchronisierwortes und Ausrichten der Bitfolge in Oktette,
- Lesen eines, im Kopfabschnitt (SOH), Zeile 4, Spalte 1 bis 9 angeordneten ersten Zeigers (AU-4), der einen Pfadkopfteil (POH) eines zellstrukturierten virtuellen Containers (VC4) adressiert,
- Lesen eines im Pfadkopfteil (POH), Zeile 6, angeordneten zweiten Zeigers (H4), der die Zellköpfe des zellstrukturierten Containers (C4) adressiert und
- Übergehen in den Synchronisationszustand (SYNC), wenn die vorgegebene Anzahl von Zellköpfen richtig decodiert wurden.

3. Verfahren nach Anspruch 1 oder 2, mit folgenden Schritten:
- Verbleiben in dem Synchronisationszustand (SYNC), solange das Rahmensynchronisierwort und die Zellköpfe als richtig erkannt werden,
- Übergehen in einen Überprüfzustand (TROUBLE), wenn entweder das Rahmensynchronisierwort oder ein Zellkopf falsch erkannt wird, und
- Starten einer Neusynchronisation, falls innerhalb einer Anzahl z aufeinander folgender Zellen eine Anzahl f falsch erkannte Zellköpfe festgestellt werden, mit z, f ganze Zahl > 0, oder
- Übergehen in den Synchronisationszustand (SYNC), falls aufeinander folgend eine Anzahl x richtig erkannter Zellköpfe festgestellt werden, mit x ganze Zahl > 0.

4. Verfahren zum Erkennen unterschiedlicher Datenstrukturen für asynchrone Transportmodule übertragende Systeme, mit folgenden Schritten:
- Überprüfen (HUNT) einer ankommenden Bitfolge auf ein vorgegebenes Rahmensyncronwort und nachfolgendes Überprüfen (HUNT) der Bitfolge auf regelmäßig eingefügte Zellköpfe angebende Codeworte und
- Übergehen in einen Rahmensynchronisiermodus, wenn ein Rahmensynchronwort erkannt wird oder
- Übergehen in einen Zellensynchronisiermodus, wenn eine vorgebbare Anzahl aufeinanderfolgender Zellköpfe richtig erkannt werden.

5. Verfahren nach Anspruch 4, mit folgenden Schritten:
- Übergehen in einen Rahmenvorsynchronisierzustand (PRE FRAME), wenn ein gemäß einer Rahmenstruktur nach einer CCITT-Empfehlung G.708 vorgegebenes Rahmensynchronwort erkannt wird, und Lesen wenigstens eines in einem vorgegebenen Abstand zum Rahmensynchronwort angeordneten Zeigers (AU-4), der einen zellstrukturierten Datenbereich (VC4) adressiert,
- Übergehen in einen Rahmensynchronisierzustand (FRAME SYNC), wenn aufeinanderfolgend eine vorgegebene Anzahl von durch den Zeiger adressierten Zellköpfen richtig erkannt werden und wenn eine vorgegebene Anzahl von Rahmensynchronwörtern richtig erkannt werden.

6. Verfahren nach Anspruch 4, mit folgenden Schritten:
- Übergehen in einen Zellenvorsynchronisierzustand (PRE CELL), wenn ein Zellkopf richtig erkannt wurde, und
- Übergehen in einen Zellensynchronsisierzustand (CELL SYNC), wenn nacheinander wenigstens sechs Zellköpfe richtig erkannt werden.

7. Verfahren nach Anspruch 6, mit folgendem Schritt:
- Übergehen in den Rahmenvorsynchronsierzustand (PRE FRAME), wenn im Zellenvorsynchronisierzustand (PRE CELL) ein Rahmensynchronwort erkannt wird.

8. Verfahren nach Anspruch 5, mit folgendem Schritt,
- Übergehen in den Zellenvorsynchronisierzustand (PRE CELL), wenn im Rahmenvorsynchronisierzustand (PRE FRAME) das vorgegebene Rahmensynchronwort nicht bestätigt wird, aber die vorgegebene Anzahl von Zellköpfen richtig erkannt werden.

9. Schaltungsanordnung zur Durchführung des Verfahrens nach einem der Patentansprüche 4 bis 8, bei der eine mit einer Eingangsleitung (EL) verbundene Rahmensynchronworterkennungseinheit (FRAME) über eine erste Schalteinheit (S1) in erster Schaltstellung mit einer mit einer Ausgangsleitung (AL) verbundenen Zellkopfdecodiereinheit (CELL) verbunden ist, und bei der nach Erkennen eines Rahmensynchronwortes die Rahmensynchronworterkennungseinheit (FRAME) über eine zweite Schalteinheit (S2) in zweiter Schaltstellung mit Mitteln (SOH, POH) zum Lesen eines in einem vorgegebenen Abstand zum Rahmensynchronwort angeordneten Zeigers und über die erste Schalteinheit (S1) in zweiter Schaltstellung die Mittel zum Lesen (SOH, POH) mit der Zellkopfdecodiereinheit (CELL) verbunden werden.

10. Schaltungsanordnung nach Anspruch 9, bei der Mittel (ALIG) zum Ausrichten der empfangenen Bitfolge in Oktette den Mitteln zum Lesen des Zeigers (SOH, POH) vorgeschaltet sind, bei der die Mittel (ALIG) zum Ausrichten über die zweite Schalteinheit (S2) in erster Schaltstellung mit der Zellkopfdecodiereinheit (CELL) und in zweiter Schaltstellung mit der Rahmensynchronworterkennungseinheit (FRAME) verbunden sind und bei der die Ausgangsleitung (AL) über eine dritte Schalteinheit (S3) in erster Schaltstellung mit den Mitteln zum Ausrichten (ALIG) bzw. in zweiter Schaltstellung mit der Zellkopfdecodiereinheit (CELL) verbunden sind.

11. Schaltungsanordnung nach Anspruch 10, bei der, bei Verwendung einer Rahmenstruktur gemäß der CCITT-Empfehlung G.708, die Mittel zum Lesen (SOH, POH) aus ersten Mitteln zum Lesen eines in einem Kopfabschnitt (SOH), Zeile 4, Spalte 1 bis 9 angeordneten ersten Zeigers (AU-4), der einen Pfadkopfteil (POH) eines zellstrukturierten virtuellen Containers (VC4) adressiert und aus nachgeschalteten zweiten Mitteln zum Lesen eines im Pfadkopfteil (POH), Zeile 6, angeordneten zweiten Zeigers (H4), der Zellköpfe des Containers (C4) adressiert, besteht.

## Claims

1. Method of synchronizing a system frame-structured in accordance with a synchronous digital hierarchy, comprising the steps of:
- detecting a frame sync word in a hunt mode (HUNT) by comparing an incoming bit sequence with a predetermined reference bit pattern;
- changing to a presync state (PRESYNC) and reading at least one pointer (AU-4) which is spaced a predetermined distance from the frame sync word and addresses a cell-structured data area (VC4) containing digitally coded bit sequences;
- decoding code words regularly inserted into the bit sequence which represent cell headers; and
- changing to a sync state (SYNC) if a predetermined number of successive correct cell headers were decoded.

2. A method as claimed in claim 1, comprising the steps of:
- using a frame structure according to CCITT Recommendation G.708 with octet-oriented synchronous transport modules (STM-1);
- detecting the frame sync word identifying the beginning of a frame of the transport module in a section overhead (SOH), and aligning the bit sequence in octets;
- reading a first pointer (AU-4) which is contained in the section overhead (SOH), row 4, columns 1 through 9, and addresses a path overhead (POH) of a cell-structured virtual container (VC4);
- reading a second pointer (H4) which is contained in the path overhead (POH), row 6, and addresses the cell headers of the cell-structured container (C4); and
- changing to the sync state (SYNC) if the predetermined number of correct cell headers were decoded.

3. A method as claimed in claim 1 or 2, comprising the steps of:
- staying in the sync state (SYNC) as long as the frame sync word and the cell headers are found to be correct;
- changing to a check state (TROUBLE) if either the frame sync word or a cell header is found to be wrong; and
- initiating a resynchronization if a number f of wrong cell headers are detected within a number z of successive cells, where z and f are integers > 0, or
changing to the sync state (SYNC) if a number x of successive correct cell headers are detected where x is an integer > 0.

4. Method of identifying different data structures for asynchronous-transport-module-transmitting systems, comprising the steps of:
- checking (HUNT) an incoming bit sequence for a predetermined frame sync word and subsequently checking (HUNT) the bit sequence for regularly inserted code words representing cell headers; and
- changing to a frame sync mode if a frame sync word is detected, or
- changing to a cell sync mode if a predeterminable number of successive correct cell headers are detected.

5. A method as claimed in claim 4, comprising the steps of:
- changing to a frame presync state (PRE FRAME) if a frame sync word predetermined in accordance with a frame structure as specified in CCITT Recommendation G.708 is detected, and reading at least one pointer (AU-4) which is spaced a predetermined distance from the frame sync word and addresses a cell-structured data area (VC4);
- changing to a frame sync state (FRAME SYNC) if a predetermined number of correct cell headers addressed by the pointer and a predetermined number of correct frame sync words are detected.

6. A method as claimed in claim 4, comprising the steps of:
- changing to a cell presync state (PRE CELL) if one correct cell header was detected, and
- changing to a cell sync state (CELL SYNC) if at least six successive correct cell headers are detected.

7. A method as claimed in claim 6, comprising the steps of:
- changing to the frame presync state (PRE FRAME) if a frame sync word is detected in the cell presync state (PRE CELL).

8. A method as claimed in claim 5, comprising the steps of:
- changing to the cell presync state (PRE CELL) if in the frame presync state (PRE FRAME), the predetermined frame sync word is not confirmed, whereas the predetermined number of correct cell headers are detected.

9. Circuit arrangement for carrying out the method claimed in any one of claims 4 to 8 wherein a frame sync word detection unit (FRAME) connected to an input line (EL) is connected, via a first switching unit (S1) in a first switch position, to a cell header decoder unit (CELL) connected to an output line (AL), and wherein after detection of a frame sync word, the frame sync word detection unit (FRAME) is connected, via a second switching unit (S2) in a second switch position, to means (SOH, POH) for reading a pointer spaced a predetermined distance from the frame sync word, while the reading means (SOH, POH) are connected, via the first switching unit (S1) in a second switch position, to the cell header decoder unit (CELL).

10. A circuit arrangement as claimed in claim 9 wherein the pointer-reading means (SOH, POH) are preceded by means (ALIG) for aligning the received bit sequence in octets, wherein the aligning means are connected to the cell header decoder unit (CELL) via the second switching unit (S2) in the first switch position and to the frame sync word detection unit (FRAME) in the second switch position, and wherein the output line (AL) is connected to the aligning means (ALIG) via a third switching unit (S3) in a first switch position and to the cell header decoder unit (CELL) in a second switch position, respectively.

11. A circuit arrangement as claimed in claim 10 wherein, if a frame structure as specified in CCITT Recommendation G.708 is used, the reading means (SOH, POH) consist of first means for reading a first pointer (AU-4) which is contained in a section overhead (SOH), row 4, columns 1 through 9, and addresses a path overhead (POH) of a cell-structured virtual container (VC4), and of subsequent second means for reading a second pointer (H4) which is contained in the path overhead (POH), row 6, and addresses cell headers of the container (C4).

## Revendications

1. Procédé de synchronisation d'un système synchrone et numérique à structure de trames, avec les différentes étapes suivantes:
- Détection d'un mot de synchronisation de trame dans un mode de recherche (HUNT) par comparaison d'une séquence de bits reçue avec une matrice binaire de référence définie au préalable.
- Transition à un état de présynchronisation (PRE SYNC) et lecture au moins d'un pointeur (AU-4) placé à une distance définie du mot de synchronisation de trame, lequel pointeur adresse un domaine cellulaire de données (VC4) contenant des séquences de bits numériques codés.
- Décodage de têtes de cellules (headers) régulièrement introduites dans la séquence de bits et représentant des mots codés, et
- Transition à un état synchronisé (SYNC) lorsqu'un nombre défini au préalable de têtes de cellules successives a été correctement décodé.

2. Procédé suivant la spécification 1, avec les différentes étapes suivantes:
- Utilisation d'une structure de trame conformément à la recommandation CCITT G.708 avec des modules de transport synchrones à octets (STM-1)
- Détermination du mot de synchronisation de trame indiquant une tête de trame du module de transport dans un section overhead SOH et alignement de la séquence de bits en octets.
- Lecture d'un premier pointeur (AU-4) placé dans le section overhead (SOH), ligne 4, colonne 1 à 9, qui adresse un path overhead (POH) d'un conteneur virtuel cellulaire VC4
- Lecture d'un deuxième pointeur (H4) se trouvant dans le path overhead (POH) à la ligne 6 qui adresse les headers du conteneur cellulaire (C4), et
- Transition à l'état synchronisé (SYNC) lorsque le nombre défini au préalable de headers ont été correctement décodés.

3. Procédé conformément à la spécification 1 ou 2, avec les différentes étapes suivantes:
- Reste à l'état synchronisé (SYNC) jusqu'à ce que mot de synchronisation de trame et les headers soient correctement détectés
- Transition à un état de vérification (TROUBLE) lorsque soit le mot de synchronisation de trame soit une tête de cellule sont incorrects, et
- Démarrage d'une nouvelle synchronisation si un nombre f de faux headers est constaté au sein d'un nombre z de cellules successives, z et f étant des nombres entiers > 0, ou bien
- Passage à l'état synchronisé (SYNC) si un nombre défini x de headers successifs sont corrects, avec x nombre entier > 0.

4. Procédé de détection de structures différentes de données pour des systèmes de transmission de modules de transport asynchrones, avec les différentes étapes suivantes:
- Vérification (HUNT) d'une séquence de bits reçue pour détecter un mot de synchronisation de trame défini au préalable et vérification ultérieure (HUNT) de la séquence de bits à la recherche de mots codés indiquant des têtes de cellules régulièrement introduites, et
- Passage à un mode de synchronisation de trame lorsqu'un mot de synchronisation de trame est détecté, ou bien
- Passage à un mode de synchronisation cellulaire lorsqu'un nombre défini au préalable de têtes de cellules successives sont reconnus corrects.

5. Procédé conformément à la spécification 4, avec les différentes étapes suivantes:
- Transition à un état de présynchronisation de trame (PRE FRAME) lorsqu'un mot de synchronisation de trame défini au préalable conformément à une structure de trames suivant une recommandation CCITT G.708 est détecté, et lecture d'un pointeur (AU-4) au moins placé à une distance définie au préalable du mot de synchronisation de trame, lequel pointeur adresse un domaine de données cellulaire (VC4);
- Transition à un état de synchronisation de trame (FRAME SYNC) lorsqu'un nombre successif défini au préalable de headers adressés par le pointeur sont correctement détectés et lorsqu'un nombre, également défini au préalable, de mots de synchronisation de trame successifs sont correctement détectés.

6. Procédé conformément à la spécification 4, avec les différentes étapes suivantes:
- Transition à un état de présynchronisation cellulaire (PRE CELL) lorsqu'une tête de cellule a été correctement détectée et
- Transition à un état de synchronisation cellulaire (CELL SYNC) lorsque six têtes de cellules successives au moins ont été correctement détectées.

7. Procédé conformément à la spécification 6, avec les différentes étapes suivantes:
- Passage à l'état de présynchronisation de trame (PRE FRAME) lorsque, à l'état de présynchronisation cellulaire (PRE CELL), un mot de synchronisation de trame est détecté.

8. Procédé conformément à la spécification 5, avec l'étape suivante:
- Transition à l'état de présynchronisation cellulaire (PRE CELL) lorsque, à l'état de présynchronisation de trame (PRE FRAME), le mot de synchronisation de trame n'est pas confirmé, mais le nombre défini au préalable de headers sont correctement détectés.

9. Circuit pour la réalisation du procédé conformément à l'une des spécifications de brevet 4 à 8, pour lequel une unité de détection de mot de synchronisation de trame (FRAME) raccordée à conduite d'entrée (EL) par l'intermédiaire d'une première unité de commutation S1, dans une première position de commutation, est raccordée à une unité de décodage de header (CELL) reliée à une conduite de sortie (AL), et pour lequel, après la détection d'un mot de synchronisation de trame, l'unité de détection de mot de synchronisation de trame (FRAME) est raccordée par l'intermédiaire d'une seconde unité de commutation (S2) en deuxième position de commutation avec des moyens secondaires (SOH, POH) pour la lecture d'un pointeur se trouvant à une distance définie du mot de synchronisation de trame, les moyens de lecture (SOH, POH) étant reliés par l'intermédiaire de la première unité de commutation (S1) en seconde position de commutation avec l'unité de décodage de header (CELL).

10. Circuit conformément à la spécification 9 pour lequel des moyens (ALIG) pour alignement de la séquence de bits reçue en octets sont placés en aval des moyens (SOH, POH) pour la lecture du pointeur, les moyens alignement (ALIG) étant reliés par l'intermédiaire de la deuxième unité de commutation (S2) en première position de commutation avec l'unité de décodage de header (CELL) et en seconde position de commutation avec l'unité de détection de mot de synchronisation de trame (FRAME). Par ailleurs, la conduite de sortie (AL) est reliée par l'intermédiaire d'une troisième unité de commutation (S3) en première position de commutation aux moyens alignement (ALIG) et, dans la seconde position de commutation, à l'unité de décodage de header (CELL).

11. Circuit conformément à la spécification 10 pour lequel, en cas d'utilisation d'une structures de trames conformément à la recommandation CCITT G.708, les moyens de lecture (SOH, POH) se composent des premiers moyens de lecture d'un premier pointeur (AU-4) se trouvant dans le section overhead (SOH), ligne 4, colonne 1 à 9, lequel pointeur adresse le path overhead (POH) d'un conteneur virtuel cellulaire (VC4), ainsi que de seconds moyens placés en aval pour la lecture d'un deuxième pointeur (H4) se trouvant dans le path overhead (POH) à la ligne 6, lequel pointeur indique les headers du conteneur (C4).
